# EUROPÄISCHE PATENTSCHRIFT

(11) **EP 3 164 311 B1**
(45) Veröffentlichungstag und Bekanntmachung des Hinweises auf die Patenterteilung: **30.12.2020**
(21) Anmeldenummer: 15733353.5
(22) Anmeldetag: 27.06.2015
(51) Int. Cl.: B60W 50/14, B60W 50/16, B60K 35/00, B60W 50/00

(54) **VERFAHREN ZUM BETREIBEN EINES KRAFTFAHRZEUGS IN VERSCHIEDENEN FAHRMODI SOWIE KRAFTFAHRZEUG**
METHOD FOR OPERATING A MOTOR VEHICLE IN DIFFERENT DRIVING MODES, AND MOTOR VEHICLE
PROCÉDÉ PERMETTANT DE FAIRE FONCTIONNER UN VÉHICULE DANS DIFFÉRENTS MODES DE CONDUITE, AINSI QUE VÉHICULE AUTOMOBILE

(30) Priorität: 04.07.2014 DE 102014009985
(43) Veröffentlichungstag der Anmeldung: 10.05.2017
(73) Patentinhaber: Daimler AG, 70372 Stuttgart (DE)
(72) Erfinder: FRANK, Peter, 70794 Filderstadt (DE); FRIEDRICH, Marie, 70435 Stuttgart (DE); KUHN, Friedemann, 72768 Reutlingen (DE); KUETING, Hans-Josef, 71686 Remseck (DE)
(74) Vertreter: JENSEN & SON
(86) Internationale Anmeldenummer: PCT/EP2015/001301
(87) Internationale Veröffentlichungsnummer: WO 2016/000814

(56) Entgegenhaltungen:
- EP-A2- 1 561 631
- DE-A1- 19 743 024
- DE-A1-102009 048 954
- DE-A1-102012 002 581
- DE-A1-102013 016 240

## Beschreibung

Die Erfindung betrifft ein Verfahren zum Betreiben eines Kraftfahrzeugs. Das Verfahren umfasst das Anzeigen einer ersten Assistenzgrafik eines ersten aktiven Fahrerassistenzsystems in einem ersten Anzeigemodus auf zumindest einer Anzeigeeinrichtung des Kraftfahrzeugs, falls das Kraftfahrzeug in einem ersten Fahrmodus betrieben wird, und das Anzeigen der ersten Assistenzgrafik des ersten aktiven Fahrerassistenzsystems in einem zweiten Anzeigemodus auf der zumindest einen Anzeigeeinrichtung, falls das Kraftfahrzeug in einem von dem ersten Fahrmodus unterschiedlichen, zweiten Fahrmodus betrieben wird. Zudem betrifft die vorliegende Erfindung ein Kraftfahrzeug.

Moderne Kraftfahrzeuge weisen in der Regel Fahrerassistenzsysteme auf. Fahrerassistenzsysteme sind elektronische Zusatzeinrichtungen in Kraftfahrzeugen, welche zur Unterstützung des Fahrers in bestimmten Fahrsituationen dienen. Eine solche Unterstützung des Fahrers wird auch als assistiertes Fahren bezeichnet. Dabei kann einem Zustand eines Fahrerassistenzsystems eine Assistenzgrafik zugeordnet sein, welche dem Fahrer auf einem Bildschirm, also einem Display, des Kraftfahrzeugs angezeigt wird. Dieser Zustand des Fahrerassistenzsystems wird in der Regel in einer definierten Perspektive angezeigt, beispielsweise in einer sogenannten Top View oder einer 2,5 D Perspektive.

Mit der Entwicklung hin zum autonomen Fahren, bei welchem das Fahrzeug selbsttätig und ohne Einwirkung des Fahrers fahren kann, sind Zwischenstufen vorgesehen. Jeder Stufe ist dabei ein Automatisierungsgrad zugeordnet. In diesen Zwischenstufen können dem Fahrer unterschiedliche Aufgaben zugewiesen sein. So kann der Fahrer beispielsweise als Überwacher bis hin zum "Passagier" fungieren, der zu einem definierten Zeitpunkt die Fahraufgabe wieder übernehmen soll.

Bei heutigen Assistenzgrafiken bzw. Fahrerassistenzanzeigen wird zwar zwischen verschiedenen Fahraufgaben getrennt, jedoch ist keine intuitive bzw. ganzheitliche Trennung zwischen verschiedenen Automatisierungsgraden vorhanden und demgemäß wird nicht verdeutlicht, welche Aufgaben dem Fahrer zuteil werden. Daraus ergibt sich der Nachteil, dass bei zunehmenden Automatisierungsgraden erhöhte Anforderungen an den Fahrer gestellt werden und ihm somit ein intuitives Betreiben des Kraftfahrzeugs erschwert wird.

Aus der DE 10 2009 048 954 A1 ist bekannt, ein Kraftfahrzeug in verschiedenen Automatisierungsgraden zu betreiben. Außerdem wird einem Fahrer eine Nebentätigkeit bereitgestellt, die sich nicht auf den Fahrbetrieb des Kraftfahrzeugs bezieht, während sich das Kraftfahrzeug in einem autonomen Fahrbetrieb befindet. Dabei wird dem Fahrer ein bestimmter Warnhinweis gegeben, welcher von einem Automatisierungsgrad abhängt. Der Warnhinweis zeigt eine Aktivität eines Fahrerassistenzsystems während des teilautonomen und autonomen Fahrens an.

Die EP 1 561 631 A2 offenbart eine Einrichtung zur Anzeige eines Zustandes eines Fahrerassistenzsystems, die je nach Funktionalität des Fahrerassistenzsystems verschiedene Perspektiven des eigenen Fahrzeuges zeigt.

Aus der DE 10 2013 016 240 A1 ist eine Vorrichtung bekannt, die bei Aktivieren eines Fahrerassistenzsystems oder bei Eintreten eines vorgegebenen Fahrmanövers auf Darstellungen unterschiedlicher Perspektive umschaltet.

Es ist Aufgabe der vorliegenden Erfindung, ein Verfahren bereitzustellen, welches ein besonders sicheres, intuitives und komfortables Betreiben eines Kraftfahrzeugs in allen Automatisierungsgraden ermöglicht.

Diese Aufgabe wird erfindungsgemäß durch ein Verfahren und durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Betreiben eines Kraftfahrzeugs. Das Verfahren umfasst das Anzeigen einer ersten Assistenzgrafik eines ersten aktiven Fahrerassistenzsystems in einem ersten Anzeigemodus auf zumindest einer Anzeigeeinrichtung des Kraftfahrzeugs, falls das Kraftfahrzeug in einem ersten Fahrmodus betrieben wird, und das Anzeigen der ersten Assistenzgrafik des ersten aktiven Fahrerassistenzsystems in einem zweiten Anzeigemodus auf der zumindest einen Anzeigeeinrichtung, falls das Kraftfahrzeug in einem von dem ersten Fahrmodus unterschiedlichen, zweiten Fahrmodus betrieben wird.

Um nun das Verfahren besonders sicher, intuitiv und komfortabel zu gestalten, ist es erfindungsgemäß vorgesehen, dass die erste Assistenzgrafik in dem ersten Anzeigemodus in einer ersten Perspektive angezeigt wird und in dem zweiten Anzeigemodus in einer von der ersten Perspektive verschiedenen zweiten Perspektive angezeigt wird.
Mit anderen Worten bedeutet dies, dass das Kraftfahrzeug in verschiedenen Fahrmodi betrieben werden kann. Dabei kann ein erstes Fahrerassistenzsystem aktiv sein, bei welchem es sich beispielsweise um eine Regelung für eine Längsdynamik und/oder eine Querdynamik handelt, die im Falle eines Fahrfehlers und/oder einer Unaufmerksamkeit eines Fahrers des Kraftfahrzeugs unterstützend eingreift. Bei einem solchen Fahrerassistenzsystem kann es sich beispielsweise um ein Navigationssystem, einen Spurwechselassistenten, einen Parkassistenten oder einen Abstandsregeltempomat handeln. Dem ersten aktiven Fahrerassistenzsystem kann eine erste Assistenzgrafik zugeordnet sein, welche auf zumindest einer Anzeigeeinrichtung des Kraftfahrzeugs angezeigt werden kann. Dabei kann die erste Assistenzgrafik in verschiedenen Anzeigemodi angezeigt werden, wobei jedem Fahrmodus ein Anzeigemodus zugeordnet ist. Der Anzeigemodus kann also, beispielsweise von einer Steuereinrichtung, fahrmodusabhängig gesteuert werden.

Um nun dem Fahrer visuell zu verdeutlichen, in welchem Fahrmodus sich das Kraftfahrzeug befindet, wird die erste Assistenzgrafik bei aktiviertem ersten Fahrmodus in einer ersten Perspektive und bei aktiviertem zweiten Fahrmodus in einer von der ersten Perspektive unterschiedlichen zweiten Perspektive dargestellt. Mögliche Perspektiven können beispielsweise eine Zentralperspektive, eine Vogelperspektive oder eine Fischaugenperspektive sein. Durch diese Visualisierung des Fahrmodus mittels einer sich dem Fahrmodus anpassenden Perspektive der ersten Assistenzgrafik, kann dem Fahrer auf besonders intuitive Weise die Höhe des Automatisierungsgrades verdeutlicht werden. Als die Höhe des Automatisierungsgrades wird hier ein Anteil eines Fahrerassistenzsystems an der Fahrzeugführung verstanden. Somit kann die Aufmerksamkeit des Fahrers besonders vorteilhaft auf die für die Fahraufgabe relevanten Informationen gelenkt werden und somit das Kraftfahrzeug sicherer betreiben werden.

Eine Ausgestaltung des Verfahrens sieht vor, dass die Assistenzgrafik auf einem Head-up-Display und/oder einem Display eines Kombiinstruments des Kraftfahrzeugs und/oder einem Display einer Headunit des Kraftfahrzeugs als die zumindest eine Anzeigeeinrichtung angezeigt wird. Das Display eines Kombiinstruments befindet sich in Regel hinter einem Lenkrad des Kraftfahrzeugs und ist somit für einen Fahrer des Kraftfahrzeugs besonders gut einsehbar. Bei einem Head-up-Display kann dem Fahrer die erste Assistenzgrafik auf die Windschutzscheibe, also direkt in sein Sichtfeld, das die Fahrbahn, auf der sich das Kraftfahrzeug bewegt, umfasst, projiziert werden. Dies wird auch als Augmented Reality bezeichnet und ermöglicht dem Fahrer eine besonders sichere Führung des Kraftfahrzeugs, da er seinen Blick nicht von der Fahrbahn, insbesondere von der aktuellen Fahrsituation, abwenden muss, um beispielsweise auf ein Display zu blicken. Auch kann die erste Assistenzgrafik auf einem Display der Headunit angezeigt werden. Die Headunit befindet sich in der Regel in einer Mittelkonsole des Kraftfahrzeugs. So ist die erste Assistenzgrafik auch für andere Fahrzeuginsassen, beispielsweise einen Beifahrer, leicht einsehbar.

Besonders bevorzugt wird das Kraftfahrzeug in dem ersten Fahrmodus teilautomatisiert betrieben und in dem zweiten Fahrmodus hochautomatisiert betrieben. Beim teilautomatisierten Fahren kann das Kraftfahrzeug durch den Fahrer und das erste aktive Fahrerassistenzsystem betrieben werden. Dabei wird die erste Assistenzgrafik des ersten aktiven Fahrerassistenzsystems auf der zumindest einen Anzeigeeinrichtung in einer ersten Perspektive angezeigt, die einem Fahrer das Überwachen der Funktionsweise des ersten aktiven Fahrerassistenzsystems auf besonders einfache Weise ermöglicht. Der Fahrer ist dadurch in der Lage, zu beurteilen, ob die durch das erste aktive Fahrerassistenzsystem durchgeführten Manöver von dem ersten aktiven Fahrerassistenzsystem beherrscht werden. Bei möglichen Störungen kann der Fahrer sofort eingreifen und die Fahrzeugführung wieder vollständig übernehmen. Der Fahrer befindet sich also immer in einem Regelkreis des ersten aktiven Fahrerassistenzsystems und ist für die Fahrzeugführung verantwortlich. Beim hochautomatisierten Fahren kann das Fahrzeug für einen gewissen Zeitraum in spezifischen Situationen selbsttätig und ohne Einwirkung des Fahrers fahren. Dabei kann der Fahrer die Fahrzeugführung an das Fahrzeug übergeben, welches beispielsweise mittels des ersten aktiven Fahrerassistenzsystems betrieben wird. Er muss das Fahrzeug nicht dauernd überwachen. Jedoch soll der Fahrer in die Lage versetzt werden, die Fahrzeugführung mit einer ausreichenden Zeitreserve übernehmen zu können. Um die Fahrzeugübernahme für den Fahrer besonders einfach und sicher zu gestalten, wird die erste Assistenzgrafik des ersten aktiven Fahrerassistenzsystems in einer zweiten Perspektive dargestellt. Die zweite Perspektive kann dabei so gewählt werden, dass dem Fahrer zu jedem Zeitpunkt die Manöver des ersten aktiven Fahrerassistenzsystems verdeutlicht werden. Nach einer hinreichenden Vorwarnzeit kann der Fahrer dadurch die Fahrzeugführung wieder übernehmen. Schafft er es nicht in der vorgegebenen Zeit, wird das Fahrzeug in einen sicheren Zustand überführt. Somit ist das Verfahren besonders sicher gestaltet.

In einer Ausführungsform des Verfahrens ist vorgesehen, dass die erste Assistenzgrafik zumindest einen Bereich in einem Umfeld des Kraftfahrzeugs und/oder zumindest eine Gefahrenquelle im Umfeld des Kraftfahrzeugs umfasst, wobei der zumindest eine Bereich und/oder die zumindest eine Gefahrenquelle mittels einer Erfassungseinrichtung des ersten aktiven Fahrerassistenzsystems erfasst werden. Eine solche Erfassungseinrichtung kann beispielsweise eine Sensorik des Kraftfahrzeugs sein, wobei die Sensordaten mittels des ersten aktiven Fahrerassistenzsystems verarbeitet werden. So kann beispielsweise ein Bereich im Umfeld des Kraftfahrzeugs oder eine Gefahrenquelle im Umfeld des Kraftfahrzeugs erfasst und auf der zumindest einen Anzeigeeinrichtung dargestellt werden. Somit können die Insassen des Kraftfahrzeugs darüber informiert werden, welche potentiell gefährlichen Situationen vom Kraftfahrzeug erkannt und berücksichtigt werden.

Erfindungsgemäß ist vorgesehen, dass der zumindest eine Bereich in dem ersten Anzeigemodus durch eine erste Markierung gekennzeichnet wird und der Bereich in dem zweiten Anzeigemodus durch eine von der ersten Markierung unterschiedliche zweite Markierung gekennzeichnet wird, wobei die erste Markierung den zumindest einen Bereich für eine Überwachung durch den Fahrer hervorhebt und die zweite Markierung den zumindest einen Bereich hervorhebt, welcher durch das erste aktive Fahrerassistenzsystem überwacht wird. Das Umfeld des Kraftfahrzeugs ist in der ersten Assistenzgrafik im ersten Anzeigemodus in einer ersten Perspektive dargestellt. Im ersten Anzeigemodus befindet sich das Kraftfahrzeug im ersten Fahrmodus, beispielsweise im teilautomatisierten Fahren. In diesem Fahrmodus kann der Fahrer als Überwacher für die Funktionsweise des ersten aktiven Fahrerassistenzsystems dienen. Um dem Fahrer in der ersten Assistenzgrafik hervorzuheben, welche Bereiche im Umfeld des Kraftfahrzeugs er überwachen soll, kann eine Markierung dieser Bereiche vorgesehen sein. So können die zu überwachenden Bereiche beispielsweise farbig hervorgehoben sein, um die Aufmerksamkeit des Fahrers auf die zu überwachenden Bereiche zu lenken. Im zweiten Anzeigemodus ist die erste Assistenzgrafik in einer zweiten Perspektive dargestellt. Im zweiten Anzeigemodus befindet sich das Kraftfahrzeug im zweiten Fahrmodus, beispielsweise im hochautomatisierten Fahren. Hier können dem Fahrer diejenigen Bereiche des Kraftfahrzeugumfeldes optisch auf der Assistenzgrafik markiert werden, die mittels des ersten aktiven Fahrerassistenzsystems durch das Kraftfahrzeug selbst überwacht werden.

Alternativ oder zusätzlich wird in dem zweiten Fahrmodus auf der zumindest einen Anzeigeeinrichtung ein geplantes Fahrmanöver des ersten aktiven Fahrerassistenzsystems angezeigt. Damit sich die von dem Fahrzeug chauffierten Personen besonders sicher fühlen, können die in den nächsten Sekunden stattfindenden Fahrmanöver angezeigt werden. Somit werden die Fahrzeuginsassen zu jedem Zeitpunkt darüber informiert, welche Manöver zukünftig durchgeführt werden. Auch kann der Fahrer gegebenenfalls eingreifen, falls er mit dem geplanten Manöver nicht einverstanden ist.

Vorzugsweise wird zumindest ein dritter Fahrmodus bereitgestellt, in welchem die erste Assistenzgrafik auf der zumindest einen Anzeigeeinrichtung in einem dritten Anzeigemodus in einer dritten Perspektive angezeigt wird. Ein solcher dritter Fahrmodus kann beispielsweise ein assistierter Fahrmodus sein, in welchem der Fahrer das Fahrzeug selbst fährt, also manuell betreibt. Dabei kann er durch das erste Fahrerassistenzsystem bei seiner Fahraufgabe unterstützt werden. Dabei wird ihm die Assistenzgrafik in einem dritten Anzeigemodus,-also in einer dritten Perspektive angezeigt.

Weiterhin ist es vorteilhaft, wenn eine zweite Assistenzgrafik zumindest eines zweiten Fahrerassistenzsystems, welches nur für eine vorbestimmte Zeitdauer aktiv ist, derart auf der zumindest einen Anzeigeeinrichtung dargestellt wird, dass die zweite Assistenzgrafik die erste Assistenzgrafik überdeckt. So kann es vorgesehen sein, dass mehrere Fahrerassistenzsysteme aktiv sind. Der Fahrer kann dabei auswählen, welche Assistenzgrafik, beispielsweise die erste Assistenzgrafik, auf der zumindest einen Anzeigeeinrichtung dargestellt wird. Wird nun das zweite Fahrerassistenzsystem beispielsweise durch einen Fahrfehler des Fahrers aktiviert, so kann das zweite Fahrerassistenzsystem das Fahrzeug derart steuern, dass der Fahrfehler ausgeglichen wird. Während dieser Zeitspanne, in welcher das zweite Fahrerassistenzsystem dieses Manöver ausführt, kann sich eine zweite Assistenzgrafik, welche dem Fahrer das Manöver visualisiert, beispielsweise als sogenanntes Pop Up, über die erste Assistenzgrafik schieben und diese somit verdecken. Wird insbesondere durch den Eingriff des zweiten Fahrerassistenzsystems der Fahrmodus gewechselt, also beispielsweise von dem dritten Fahrmodus in den ersten Fahrmodus, so ändert sich entsprechend auch die Perspektive der Assistenzgrafiken.

Es kann vorgesehen sein, dass ein Warnsignal ausgegeben wird, bevor von dem zweiten Fahrmodus in den ersten Fahrmodus gewechselt wird. Falls sich das Kraftfahrzeug im zweiten Fahrmodus befindet, also in einem hochautomatisierten Fahrmodus, so soll dem Fahrer bei einem Wechsel in den ersten Fahrmodus, also in den teilautomatisierten Fahrmodus signalisiert werden, dass der Fahrer nun wieder die Fahraufgabe übernehmen soll. Insbesondere soll ihm so verdeutlicht werden, dass er beispielsweise eine Umgebung des Kraftfahrzeugs selbst überwachen soll. Mittels des Warnsignals kann also ein besonders sicherer Wechsel zwischen den beiden Fahrmodi bereitgestellt werden. Besonders bevorzugt wird das Warnsignal visuell und/oder akustisch und/oder haptisch ausgegeben. Als visuelles Warnsignal kann beispielsweise ein Schriftzug auf der zumindest einen Anzeigeeinrichtung vorgesehen sein, welcher dem Fahrer verdeutlich, dass er beispielsweise die aktuelle Verkehrssituation beachten soll. Auch kann als visuelles Warnsignal ein Einblenden eines Videobildes der aktuellen Verkehrssituation vorgesehen sein. Ein akustisches Warnsignal kann beispielsweise ein Ton oder eine elektronische Ansage sein.

Ein erfindungsgemäßes Kraftfahrzeug umfasst eine Steuereinrichtung, die zum Durchführen eines erfindungsgemäßen Verfahrens ausgebildet ist.

Im Folgenden wird nun die Erfindung anhand eines bevorzugten Ausführungsbeispiels wie auch unter Bezugnahme auf die beigefügten Zeichnungen näher erläutert.

Dabei zeigen:
- Fig. 1: eine schematische Darstellung einer Anzeigeeinrichtung eines Kraftfahrzeugs, auf der eine Assistenzgrafik in einer dritten Perspektive dargestellt wird;
- Fig. 2: eine schematische Darstellung der Anzeigeeinrichtung des Kraftfahrzeugs, auf der eine weitere Assistenzgrafik in einer dritten Perspektive dargestellt wird;
- Fig. 3: eine schematische Darstellung der Anzeigeeinrichtung des Kraftfahrzeugs, auf der die Assistenzgrafik in einer ersten Perspektive dargestellt wird;
- Fig. 4: eine schematische Darstellung einer Ausführungsform der Anzeigeeinrichtung des Kraftfahrzeugs, au der die Assistenzgrafik in einer zweiten Perspektive dargestellt wird;
- Fig. 5: eine schematische Darstellung einer weiteren Ausführungsform der Anzeigeeinrichtung des Kraftfahrzeugs, auf der die Assistenzgrafik in der zweiten Perspektive dargestellt wird; und
- Fig. 6: eine schematische Darstellung einer weiteren Ausführungsform der Anzeigeeinrichtung des Kraftfahrzeugs, auf der die Assistenzgrafik in der dritten Perspektive dargestellt wird.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

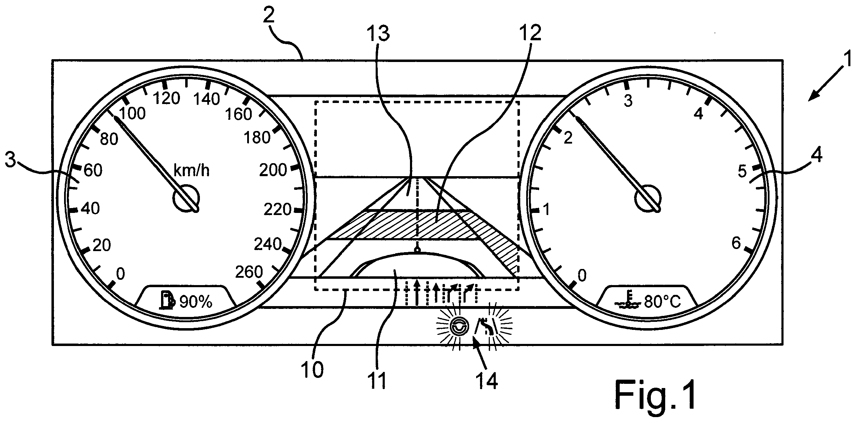

Fig. 1 zeigt eine Anzeigeeinrichtung 1 eines Kraftfahrzeugs. Das Kraftfahrzeug befindet sich in diesem Ausführungsbeispiel in einem dritten Fahrmodus, insbesondere einem assistierten Fahrmodus. Dabei wird das Kraftfahrzeug von einem Fahrer geführt, wobei der Fahrer von einem ersten aktiven Fahrerassistenzsystem in seiner Fahraufgabe unterstützt wird. Ein solches erstes Fahrerassistenzsystem kann beispielsweise ein radargestützter Abstandsregeltempomat, der auch als DTR (Distronic Plus) bezeichnet wird, sein. Der Abstandsregeltempomat kann den Fahrer derart in seiner Fahraufgabe unterstützen, dass das Kraftfahrzeug automatisch einen Abstand zu einem anderen Fahrzeug hält, welches sich vor dem durch den Fahrer gesteuerten Kraftfahrzeug auf der Fahrbahn befindet. Zusätzlich können weitere Fahrerassistenzsysteme vorgesehen sein, welche den Fahrer bei seiner Fahraufgabe unterstützen können. Weitere Fahrerassistenzsysteme können beispielsweise ein Spurhalteassistent oder ein Parkassistent sein.

Die Anzeigeeinrichtung 1 ist hier als ein Display 2 eines Kombiinstruments ausgeführt. Das Kombiinstrument kann beispielsweise hinter einem Lenkrad des Kraftfahrzeugs angeordnet sein. Das Kombiinstrument kann einen Tachometer 3 und einen Drehzahlmesser 4 umfassen, welche als mechanische Anzeigen ausgeführt sein können oder auf dem Display 2 des Kombiinstruments dargestellt werden können. Zusätzlich können in dem Kombiinstrument beispielsweise Tankanzeigen, Kühlmitteltemperaturanzeige, Kontrollleuchten und Fahrtrichtungsanzeiger vorgesehen sein.

Auf dem Display 2 des Kombiinstruments kann eine erste Assistenzgrafik 10 dargestellt werden, welche dem ersten Fahrerassistenzsystem zugeordnet ist. Die erste Assistenzgrafik 10 kann aber auch auf einem Head-up-Display oder einem anderen Display des Kraftfahrzeugs dargestellt werden.

Die erste Assistenzgrafik 10 kann beispielsweise ein Umfeld des Kraftfahrzeugs anzeigen, welches durch eine Erfassungseinrichtung des ersten aktiven Fahrerassistenzsystems erfasst wird. Da das Kraftfahrzeug in diesem Ausführungsbeispiel in dem assistierten Fahrmodus betrieben wird, wird die erste Assistenzgrafik in einem dritten Anzeigemodus, also in einer dritten Perspektive, angezeigt. Die dritte Perspektive ist hier als Zentralperspektive ausgeführt. Dabei wird das Umfeld des Kraftfahrzeugs dem Fahrer derart angezeigt, als würde der Fahrer aus einer Windschutzscheibe des Kraftfahrzeugs heraus auf eine Fahrbahn blicken, auf welcher das Kraftfahrzeug fährt. Um diesen Eindruck zu verdeutlichen, sind auf der Assistenzgrafik 10 eine Motorhaube eines virtuellen Kraftfahrzeugs 11 und eine virtuelle Fahrbahn 13 dargestellt

Da der Fahrer in dem assistierten Fahrmodus durch das erste aktive Fahrerassistenzsystem unterstützt wird, können ihm mittels der ersten Assistenzgrafik 10 beispielsweise diejenigen Bereiche 12 im Umfeld des Kraftfahrzeugs angezeigt werden, welchen der Fahrer besondere Beachtung schenken soll. Die Bereiche 12 können dabei optisch hervorgehoben, beispielsweise farbig markiert, werden, um die Aufmerksamkeit des Fahrers auf die überwachenden Bereiche 12 zu lenken.

Falls weitere Fahrerassistenzsysteme vorgesehen sind, können diese mittels Symbolen 14 zusätzlich auf dem Display 2 des Kombiinstruments angezeigt werden. Um einen aktiven Zustand der weiteren Fahrerassistenzsysteme zu visualisieren, kann es vorgesehen sein, dass die Symbole 14 leuchten. Es kann vorgesehen sein, dass der Fahrer diejenige Assistenzgrafik eines Fahrerassistenzsystems auswählen kann, welche er sich dauerhaft auf der Anzeigeeinrichtung anzeigen lassen möchte.

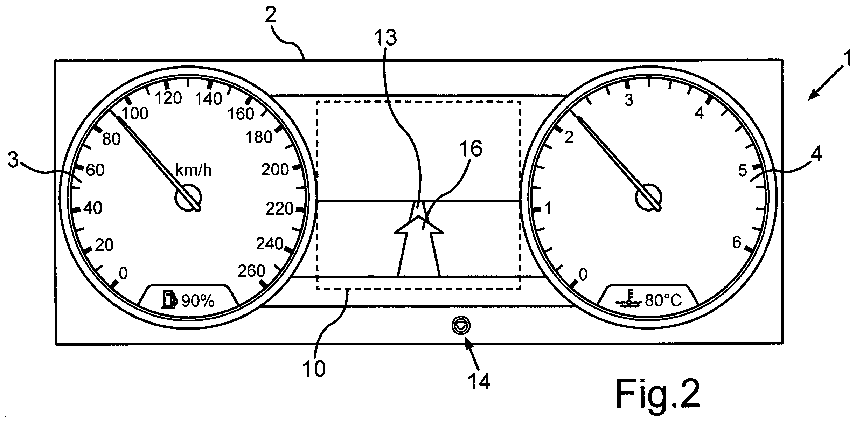

Fig. 2 zeigt die Anzeigeeinrichtung 1 des Kraftfahrzeugs aus Fig. 1. Das Kraftfahrzeug befindet sich in einem dritten Fahrmodus. In diesem Ausführungsbeispiel wird der Fahrer des Kraftfahrzeugs durch ein erstes Fahrerassistenzsystem, welches der Navigation dient, unterstützt. Die erste Assistenzgrafik 10 des Navigationssystems ist auf dem Display 2 des Kombiinstrumentes dargestellt. Da das Kraftfahrzeug in dem dritten Fahrmodus betrieben wird, wird die erste Assistenzgrafik 10 in einer dritten Perspektive, beispielsweise der Zentralperspektive, angezeigt. Dabei werden dem Fahrer in der ersten Assistenzgrafik 10 beispielsweise Pfeile 16 auf der virtuellen Fahrbahn 13 angezeigt, die der Navigation dienen. Zusätzlich wird hier ein Symbol 14 eines weiteren Fahrerassistenzsystems auf dem Display 2 des Kombiinstruments angezeigt. Um zu visualisieren, dass das weitere Fahrerassistenzsystem inaktiv ist, wird das Symbol 14 als nicht leuchtend dargestellt.

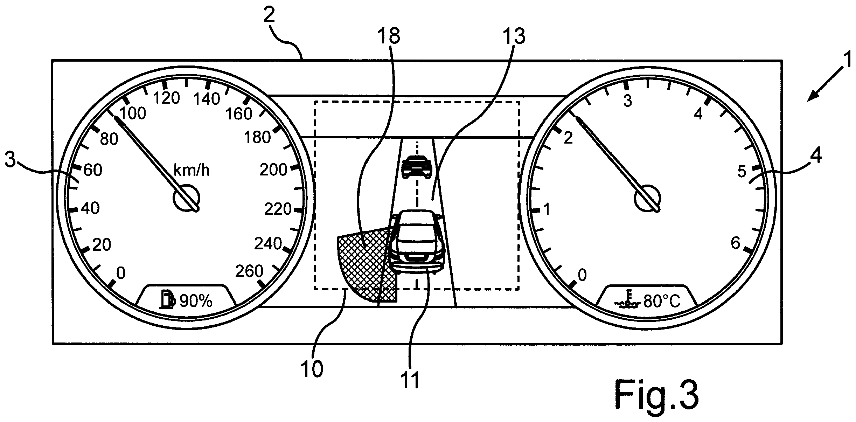

Fig. 3 zeigt die Anzeigeeinrichtung 1 des Kraftfahrzeugs, welches in einem ersten Fahrmodus betrieben wird. Der erste Fahrmodus kann ein teilautomatisierter Fahrmodus sein. Dieser Fahrmodus weist einen höheren Automatisierungsgrad auf als der assistierte Fahrmodus. Dabei steuern der Fahrer und ein erstes aktives Fahrerassistenzsystem das Kraftfahrzeug gemeinsam. Der Fahrer fungiert dabei als Überwacher von Funktionen des ersten aktiven Fahrerassistenzsystems. In diesem Ausführungsbeispiel ist das erste aktive Fahrerassistenzsystem als Spurwechselassistent ausgeführt.

Eine erste Assistenzgrafik 10, welche dem ersten Fahrerassistenzsystem, insbesondere dem Spurwechselassistenten, zugeordnet ist, wird auf einem Display 2 des Kombiinstruments angezeigt. Um dem Fahrer zu verdeutlichen, dass sich das Kraftfahrzeug im teilautomatisierten Fahrmodus befindet, ist die erste Assistenzgrafik in einer ersten Perspektive dargestellt. Die erste Assistenzgrafik 10 zeigt hier ein virtuelles Kraftfahrzeug 11, welches das Kraftfahrzeug darstellen soll, in welchem sich der Fahrer befindet, aus der Vogelperspektive. Beim Spurwechselassistenten ist ein rückwärtiger Verkehr in einer anvisierten Fahrspur sowie Bereiche neben und ein kurzer Bereich vor dem Kraftfahrzeug auf der anvisierten Fahrspur relevant. Diesen Bereichen soll besondere Beachtung geschenkt werden. Aus diesem Grund sind die zu überwachenden Bereiche in der ersten Assistenzgrafik 10 mit einer Markierung 18 versehen. Eine solche Markierung 18 kann beispielsweise derart ausgeführt sein, dass die zu überwachenden Bereiche farbig hervorgehoben sind.

Es kann beispielsweise vorgesehen sein, dass sich das Kraftfahrzeug zuerst in dem assistierten Fahrmodus befindet, welcher in Fig. 1 beschrieben wird und in welchem der Abstandsregeltempomat als erste Assistenzgrafik 10 auf dem Display 2 des Kombiinstruments angezeigt wird. Zusätzlich sind weitere Fahrerassistenzsysteme, beispielsweise der Spurwechselassistent, aktiv. Der Spurwechselassistent kann ein permanent aktives System sein, welches dem Fahrer bei einer Zustandsänderung seinen Zustand unabhängig davon meldet, welcher Anzeigemodus (beispielsweise der dritte Anzeigemodus, welcher dem dritten Fahrmodus, also dem assistierten Fahren, zugeordnet ist) im Display 2 des Kombiinstruments ausgewählt ist. Wenn ein solches permanent aktives Fahrerassistenzsystem, beispielsweise der Spurwechselassistent, nun aktiviert wird, um ein bestimmtes Manöver auszuführen, so wird das Kraftfahrzeug für die Zeitdauer des Manövers, beispielsweise in dem ersten Fahrmodus betrieben. Dabei kann es vorgesehen sein, dass die Assistenzgrafik, welche dem Spurwechselassistenten zugeordnet ist, von der Aktivierung bis zum Manöverende als sogenanntes Pop Up, insbesondere als zeitlich befristetes Pop Up, auf der Anzeigeeinrichtung 1 angezeigt wird und dabei die Assistenzgrafik, welche dem Abstandsregeltempomat zugeordnet ist, überdeckt. Dabei wird die überdeckende Assistenzgrafik, also die Assistenzgrafik des Spurwechselassistenten, in demjenigen Anzeigemodus, also in derjenigen Perspektive angezeigt, welche dem ersten Fahrmodus zugeordnet ist. Somit kann dem Fahrer visualisiert werden, in welchem Fahrmodus sich das Kraftfahrzeug befindet.

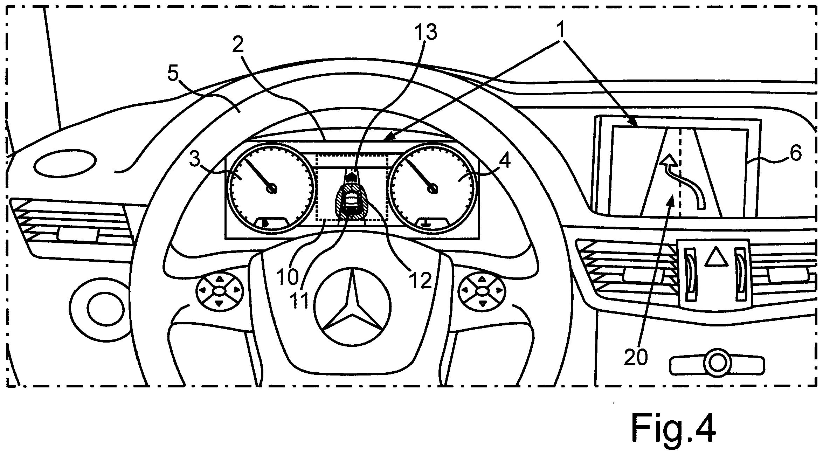

Fig. 4 zeigt eine Anzeigeeinrichtung 1 eines Kraftfahrzeugs, welches in einem zweiten Fahrmodus betrieben wird. Der zweite Fahrmodus kann beispielweise als hochautomatisierter Fahrmodus ausgeführt sein. Beim hochautomatisierten Fahren übergibt ein Fahrer des Kraftfahrzeugs die Fahrzeugführung an das Kraftfahrzeug. Das Kraftfahrzeug wird als beispielsweise durch ein erstes aktives Fahrerassistenzsystem betrieben. Der Fahrer muss dabei das Kraftfahrzeug nicht permanent überwachen. Somit können sich der Fahrer sowie alle anderen Fahrzeuginsassen entspannt von dem Kraftfahrzeug chauffieren lassen. Die Anzeigeeinrichtung 1 ist als Kombiinstrument, welches sich hinter einem Lenkrad des Kraftfahrzeugs befindet, ausgeführt. Das Kombiinstrument kann baugleich zu dem Kombiinstrument der bereits beschriebenen Figuren ausgeführt sein.

Auf dem Display 2 des Kombiinstruments wird eine erste Assistenzgrafik 10 des ersten aktiven Fahrerassistenzsystems angezeigt. Die Anzeige auf dem Display 2 des Kombiinstruments unterscheidet sich dabei deutlich von einer Anzeige eines manuellen Fahrmodus, insbesondere eines assistierten Fahrmodus. Somit soll dem Fahrer der hochautomatisierte Fahrmodus rückgemeldet werden. Um dem Fahrer zu visualisieren, wer für die Fahrzeugführung verantwortlich ist, können wesentliche Inhalte auf der Anzeige dargestellt werden. Diese Inhalte können beispielsweise die gefahrene Geschwindigkeit sowie relevante Ge- und Verbotsschilder, beispielsweise ein Geschwindigkeitslimit oder ein Überholverbot, sein.

Falls vorgesehen ist, dass der Fahrer das Fahrzeug wieder übernehmen soll, also dass von dem zweiten Fahrmodus beispielsweise in den ersten Fahrmodus gewechselt werden soll, kann dem Fahrer beispielsweise auf dem Display 2 des Kombiinstruments in bestimmten Zeitabständen nach akustischer Vorankündigung ein Videobild der aktuellen Fahrszene eingeblendet werden. Das Video kann durch Quittieren durch den Fahrer nach einer definierten Mindestanzeigedauer wieder ausgeblendet werden. Während der Videoeinblendung kann es vorgesehen sein, dass andere Displays, welche im Kraftfahrzeug angeordnet sind und welche von einem Fahrersitz aus einsehbar sind, dunkel geschaltet werden.

Eine weitere Option, um die Aufmerksamkeit des Fahrers auf den Verkehr zu lenken, kann sein, anstelle der Einblendung des Videobildes, einen Hinweiston vorzusehen. Nach diesem Hinweiston können wiederum alle vom Fahrer einsehbaren Displays dunkel geschaltet werden, oder einen Hinweis, beispielsweise den Schriftzug "Verkehrsumfeld beachten", einzublenden.

Zusätzlich kann es vorgesehen sein, dass dem Fahrer beispielsweise auf dem Display 6 einer Headunit, welche in einer Mittelkonsole des Kraftfahrzeugs angeordnet sein kann, eine Grafik 20 angezeigt wird, welche ein durch das Kraftfahrzeug geplantes Fahrmanöver darstellt. Durch diese manöverbasierte Vorschau kann den Insassen des Kraftfahrzeugs transparent gemacht werden, was das Kraftfahrzeug in den nächsten Sekunden tun wird. So können beispielsweise die folgenden Manöver angezeigt werden: Fahrspurwechsel, Überholvorgänge, Abbiegevorgänge, Anpassung der Fahrgeschwindigkeit an das aktuelle Limit.

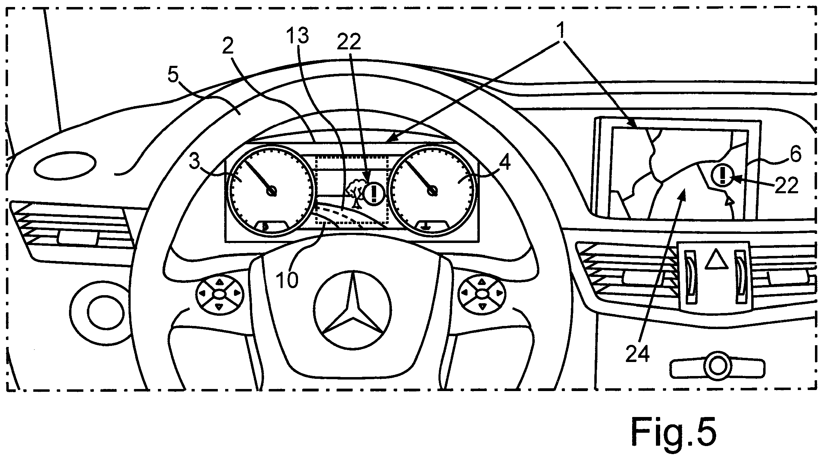

Fig. 5 zeigt eine weitere Ausführungsform einer Darstellung der ersten Assistenzgrafik 10 auf der Anzeigeeinrichtung 1 eines Kraftfahrzeugs. Das Fahrzeug befindet sich in einem zweiten Fahrmodus. Mittels einer Sensorik des Kraftfahrzeugs können potentielle Gefahrenquellen 22 erkannt werden. Diese potentiellen Gefahrenquellen 22 können in der ersten Assistenzgrafik 10 auf der Anzeigeeinrichtung 1, welche als ein Instrumentencluster ausgeführt ist, dargestellt werden. Das Instrumentencluster umfasst ein Display 2 eines Kombiinstruments und ein Display 6 einer Headunit.

Da sich das Kraftfahrzeug hier in einem hochautomatisierten Fahrmodus befindet, kann dem Fahrer mittels der Darstellung der potentiellen Gefahrenquellen 22 in der ersten Assistenzgrafik 10 signalisiert werden, dass das Kraftfahrzeug die Situation beherrscht. Potentielle Gefahrenquellen können Vorkommnisse sein, welche ein erfahrener Fahrer mit besonderer Aufmerksamkeit beobachten würde. Dies kann, wie hier in dem Display 2 des Kombiinstruments gezeigt, ein liegengebliebenes Kraftfahrzeug sein. Auf Wunsch des Fahrers kann zusätzlich auf einer Karte 24, welche auf dem Display 6 der Headunit dargestellt sein kann, der Ort gekennzeichnet sein, an welchem sich das liegengebliebene Kraftfahrzeug befindet. Befinden sich mehrere Personen in dem Kraftfahrzeug, so können die Informationen so angezeigt werden, dass sie von allen Personen einsehbar sind. Falls die vorderen Sitze drehbar sind, sollte die Information von allen Passagieren im Fond einsehbar sein.

Andere Gefahrenquellen 22 können beispielsweise ein Gegenverkehr bei verengter Fahrbahn, sodass das Kraftfahrzeug anhalten oder nach rechts ausweichen muss, oder ein Radfahrer auf der Fahrbahn des Kraftfahrzeugs, welcher nur durch Verlassen der Fahrbahn nach links überholt werden kann, sein. Weitere Beispiele für Gefahrenquellen 22 sind: spielende Kinder, die eventuell unvermittelt auf die Fahrbahn treten, ein freilaufendes Tier, eine Ampel, deren Signal beachtet werden muss, eine Kreuzung, auf welcher sich ein vorfahrtberechtigtes Kraftfahrzeug nähert oder auch nicht vorfahrtsberechtigte Verkehrsteilnehmer, die ihre Gewährpflicht zu verletzen drohen.

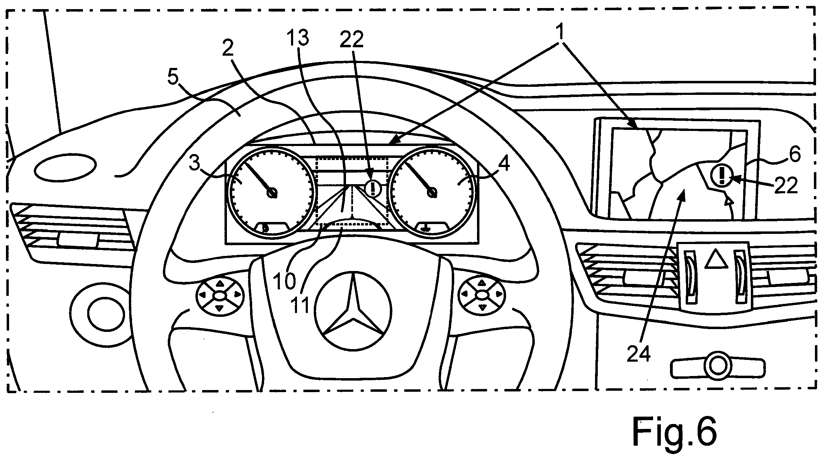

Fig. 6 zeigt eine weitere Ausführungsform einer Darstellung der ersten Assistenzgrafik 10 auf der Anzeigeeinrichtung 1 eines Kraftfahrzeugs. Das Fahrzeug befindet sich in einem dritten, insbesondere einem assistierten, Fahrmodus. Die Anzeigeeinrichtung 1 ist als Instrumentencluster ausgeführt. Das Instrumentencluster umfasst ein Display 2 eines Kombiinstruments und ein Display 6 einer Headunit.

Dabei ist auf dem Display 2 des Kombiinstruments beispielsweise eine erste Assistenzgrafik 10 für einen Spurwechselassistenten angezeigt. Die erste Assistenzgrafik 10 ist in demjenigen Anzeigemodus, also in derjenigen Perspektive angezeigt, welche dem assistierten Fahrmodus zugeordnet ist. Zusätzlich ist in der ersten Assistenzgrafik 10 eine Gefahrenquelle 22 markiert. Diese kann beispielsweise ein liegengebliebenes Fahrzeug sein. Der Ort der Gefahrenquelle 22 kann, wie in Fig. 5 beschrieben, außerdem auf einer Karte 24, welche auf dem Display 6 der Headunit dargestellt sein kann, angezeigt werden.

Insgesamt ist somit durch die Ausführungsbeispiele ein Anzeigekonzept für assistiertes, teil- bzw. hochautomatisiertes Fahren gezeigt. Dabei wird eine verbleibende Fahreraufgabe durch eine an den Automatisierungsgrad zugeordnete Perspektive der Assistenzgrafik visualisiert.

## Patentansprüche

1. Verfahren zum Betreiben eines Kraftfahrzeugs mit den Schritten:
- Anzeigen einer ersten Assistenzgrafik (10) eines ersten aktiven Fahrerassistenzsystems in einem ersten Anzeigemodus auf zumindest einer Anzeigeeinrichtung (1) des Kraftfahrzeugs, falls das Kraftfahrzeug in einem ersten Fahrmodus betrieben wird, und
- Anzeigen der ersten Assistenzgrafik (10) des ersten aktiven Fahrerassistenzsystems in einem zweiten Anzeigemodus auf der zumindest einen Anzeigeeinrichtung (1), falls das Kraftfahrzeug in einem von dem ersten Fahrmodus unterschiedlichen, zweiten Fahrmodus betrieben wird,
wobei die erste Assistenzgrafik (10) in dem ersten Anzeigemodus in einer ersten Perspektive angezeigt wird und in dem zweiten Anzeigemodus in einer von der ersten Perspektive verschiedenen zweiten Perspektive angezeigt wird und wobei die erste Assistenzgrafik (10) zumindest einen Bereich (12) in einem Umfeld des Kraftfahrzeugs umfasst, wobei der zumindest eine Bereich (12) mittels einer Erfassungseinrichtung des ersten aktiven Fahrerassistenzsystems erfasst wird, **dadurch gekennzeichnet, dass**
der zumindest eine Bereich (12) in dem ersten Anzeigemodus durch eine erste Markierung (18) gekennzeichnet wird und der Bereich (12) in dem zweiten Anzeigemodus durch eine von der ersten Markierung (18) unterschiedliche zweite Markierung gekennzeichnet wird, wobei die erste Markierung (18) den zumindest einen Bereich (12) für eine Überwachung durch den Fahrer hervorhebt und die zweite Markierung den zumindest einen Bereich (12) hervorhebt, welcher durch das erste aktive Fahrerassistenzsystem überwacht wird.

2. Verfahren nach Anspruch 1,
**dadurch gekennzeichnet, dass**
als die zumindest eine Anzeigeeinrichtung (1) ein Head-up Display und/oder ein Display (2) eines Kombiinstruments des Kraftfahrzeugs und/oder ein Display (6) einer Headunit des Kraftfahrzeugs bereitgestellt wird.

3. Verfahren nach Anspruch 1 oder 2,
**dadurch gekennzeichnet, dass**
das Kraftfahrzeug in dem ersten Fahrmodus teilautomatisiert betrieben wird und das Kraftfahrzeug in dem zweiten Fahrmodus hochautomatisiert betrieben wird.

4. Verfahren nach einem der vorhergehenden Ansprüche,
**dadurch gekennzeichnet, dass**
die erste Assistenzgrafik (10) zumindest eine Gefahrenquelle (22) im Umfeld des Kraftfahrzeugs umfasst, wobei die zumindest eine Gefahrenquelle (22) mittels der Erfassungseinrichtung des ersten aktiven Fahrerassistenzsystems erfasst wird.

5. Verfahren nach einem der vorhergehenden Ansprüche,
**dadurch gekennzeichnet, dass**
in dem zweiten Fahrmodus auf der zumindest einen Anzeigeeinrichtung (1) ein geplantes Fahrmanöver des ersten aktiven Fahrerassistenzsystems angezeigt wird.

6. Verfahren nach einem der vorhergehenden Ansprüche,
**dadurch gekennzeichnet, dass**
zumindest ein dritter Fahrmodus bereitgestellt wird und in welchem die erste Assistenzgrafik (10) auf der zumindest einen Anzeigeeinrichtung (1) in einem dritten Anzeigemodus in einer dritten Perspektive angezeigt wird.

7. Verfahren nach einem der vorhergehenden Ansprüche,
**dadurch gekennzeichnet, dass**
eine zweite Assistenzgrafik zumindest eines zweiten Fahrerassistenzsystems, welches nur für eine vorbestimmte Zeitdauer aktiv ist, derart auf der zumindest einen Anzeigeeinrichtung (1) dargestellt wird, dass die zweite Assistenzgrafik die erste Assistenzgrafik (10) überdeckt.

8. Verfahren nach einem der vorhergehenden Ansprüche,
**dadurch gekennzeichnet, dass**
ein Warnsignal ausgegeben wird, bevor von dem zweiten Fahrmodus in den ersten Fahrmodus gewechselt wird, wobei das Warnsignal visuell und/oder akustisch und/oder haptisch ausgegeben wird.

9. Kraftfahrzeug mit einer Steuereinrichtung, welche zum Durchführen eines Verfahrens nach einem der vorhergehenden Ansprüche ausgebildet ist.

## Claims

1. Method for operating a motor vehicle, comprising the steps of:
- displaying a first assistance graphic (10) of a first active driver assistance system in a first display mode on at least one display device (1) of the motor vehicle if the motor vehicle is operated in a first driving mode, and
- displaying the first assistance graphic (10) of the first active driver assistance system in a second display mode on at the least one display device (1) if the motor vehicle is operated in a second driving mode different from the first driving mode,
wherein the first assistance graphic (10) is displayed in a first perspective in the first display mode and in a second perspective different from the first perspective in the second display mode, and wherein the first assistance graphic (10) comprises at least one area (12) in an environment of the motor vehicle, wherein the at least one area (12) is detected by means of a detection device of the first active driver assistance system,
**characterised in that**
the at least one area (12) is identified by a first marking (18) in the first display mode and the area (12) is identified by a second marking different from the first marking (18) in the second display mode, wherein the first marking (18) highlights the at least one area (12) for monitoring by the driver and the second marking highlights the at least one area (12) monitored by the first active driver assistance system.

2. Method according to claim 1,
**characterised in that**
a head-up display and/or a display (2) of an instrument cluster of the motor vehicle and/or a display (6) of a head unit of the motor vehicle are/is provided as the at least one display device (1).

3. Method according to claim 1 or 2,
**characterised in that**
the motor vehicle is operated in a semi-automated way in the first driving mode and the motor vehicle is operated in a highly automated way in the second driving mode.

4. Method according to any of the preceding claims,
**characterised in that**
the first assistance graphic (10) comprises at least one danger source (22) in the environment of the motor vehicle, wherein the at least one danger source (22) is detected by means of the detection device of the first active driver assistance system.

5. Method according to any of the preceding claims,
**characterised in that**
a planned driving manoeuvre of the first active driver assistance system is displayed on the at least one display device (1) in the second driving mode.

6. Method according to any of the preceding claims,
**characterised in that**
at least one third driving mode is provided, in which the first assistance graphic (10) is displayed on the at least one display device (1) in a third display mode in a third perspective.

7. Method according to any of the preceding claims,
**characterised in that**
a second assistance graphic of at least one second driver assistance system, which is only active for a predetermined period of time, is displayed on the at least one display device (1) in such a way that the second assistance graphic overlays the first assistance graphic (10).

8. Method according to any of the preceding claims,
**characterised in that**
a warning signal is output before a switch from the second driving mode to the first driving mode, the warning signal being output visually and/or audibly and/or haptically.

9. Motor vehicle with a control device designed for implementing a method according to any of the preceding claims.

## Revendications

1. Procédé de fonctionnement d'un véhicule à moteur comprenant les étapes consistant à :
- afficher un premier graphique d'aide (10) d'un premier système d'aide à la conduite activé dans un premier mode d'affichage sur au moins une unité d'affichage (1) du véhicule à moteur, au cas où le véhicule à moteur fonctionne dans un premier mode de conduite, et
- afficher le premier graphique d'aide (10) du premier système d'aide à la conduite activé dans un seconde mode d'affichage sur ladite unité d'affichage (1), au cas où le véhicule à moteur fonctionne dans un second mode de conduite différent du premier mode de conduite,
le premier graphique d'aide (10) étant affiché dans le premier mode d'affichage dans une première perspective et dans le second mode d'affichage dans une seconde perspective différente de la première perspective et le premier graphique d'aide (10) comprenant au moins une zone (12) dans un environnement du véhicule à moteur, ladite zone (12) étant détectée au moyen d'un dispositif de détection du premier système d'aide à la conduite activé, **caractérisé en ce que** ladite zone (12) est indiquée dans le premier mode d'affichage par un premier marquage (18) et la zone (12) est indiquée dans le deuxième mode d'affichage par un second marquage différent du premier marquage (18), le premier marquage (18) mettant en évidence ladite zone (12) pour qu'elle soit surveillée par le conducteur et le second marquage mettant en évidence ladite zone (12) qui est surveillée par le premier système d'aide à la conduite activé.

2. Procédé selon la revendication 1, **caractérisé en ce que** ladite unité d'affichage (1) permet d'obtenir un affichage tête-haute et/ou un affichage (2) d'un instrument combiné du véhicule à moteur et/ou un affichage (6) d'un dispositif d'info-divertissement du véhicule à moteur.

3. Procédé selon la revendication 1 ou la revendication 2, **caractérisé en ce que** le véhicule à moteur fonctionne de manière semi-automatisée dans le premier mode de conduite et le véhicule à moteur fonctionne de manière hautement automatisée dans le deuxième mode de conduite.

4. Procédé selon l'une quelconque des revendications précédentes, **caractérisé en ce que** le premier graphique d'aide (10) comprend au moins une source de dangers (22) dans l'environnement du véhicule à moteur, ladite source de dangers (22) étant détectée au moyen du dispositif de détection du premier système d'aide à la conduite actif.

5. Procédé selon l'une quelconque des revendications précédentes, **caractérisé en ce que** dans le deuxième mode de conduite ladite unité d'affichage (1) du premier système d'aide à la conduite activé affiche une manœuvre de conduite planifiée.

6. Procédé selon l'une quelconque des revendications précédentes, **caractérisé en ce qu'**au moins un troisième mode de conduite est obtenu et dans lequel le premier graphique d'aide (10) est affiché sur ladite unité d'affichage (1) dans un troisième mode d'affichage dans une troisième perspective.

7. Procédé selon l'une quelconque des revendications précédentes, **caractérisé en ce qu'**un second graphique d'aide d'au moins un second système d'aide à la conduite qui est activé uniquement pour une durée de temps prédéfinie, est présenté sur ladite unité d'affichage (1) de telle sorte le second graphique d'aide recouvre le premier graphique d'affichage (10).

8. Procédé selon l'une quelconque des revendications précédentes, **caractérisé en ce qu'**un signal d'avertissement est transmis, avant le passage du deuxième mode de conduite au premier mode de conduite, le signal d'avertissement étant transmis de manière visuelle et/ou sonore et/ou haptique.

9. Véhicule à moteur comprenant une unité de commande qui est conçue pour exécuter le procédé selon l'une quelconque des revendications précédentes.
